# EUROPÄISCHE PATENTSCHRIFT

(11) **EP 1 396 659 B1**
(45) Veröffentlichungstag und Bekanntmachung des Hinweises auf die Patenterteilung: **26.07.2006**
(21) Anmeldenummer: 02020122.4
(22) Anmeldetag: 07.09.2002
(51) Int. Cl.: F16G 5/20, F16G 1/28, F16G 5/06

(54) **Antriebsriemen**
Driving belt
Courroie de transmission

(43) Veröffentlichungstag der Anmeldung: 10.03.2004
(73) Patentinhaber: ContiTech Antriebssysteme GmbH, 30165 Hannover (DE)
(72) Erfinder: Teves, Reinhard, Dr., 30926 Seelze (DE); Nonnast, Tobias, 30457 Hannover (DE); Greydanus, Ymte, 30890 Barsinghausen (DE); Zimmermann, Kay, 30826 Garbsen (DE)
(74) Vertreter: Finger, Karsten

(56) Entgegenhaltungen:
- EP-A- 0 176 686
- EP-A- 0 599 145
- EP-A- 0 642 886
- EP-A- 0 662 571
- EP-A- 1 108 750
- DE-A- 10 016 351
- DE-C- 4 318 454
- US-A- 4 302 197
- US-A- 5 904 630

## Beschreibung

Die Erfindung betrifft einen Antriebsriemen aus Gummi oder gummiähnlichem Kunststoff mit einer in den Gummi oder den gummiähnlichen Kunststoff eingebetteten Zugträgerlage und gegebenenfalls Oberflächenarmierungen und/oder -beschichtungen, wobei zumindest der Gummi oder gummiähnliche Kunststoff und/oder die Oberflächenbeschichtung, der bzw. die beim Betrieb mit Scheiben oder Rollen in Kontakt kommt bzw. kommen, Fasern mit einer Länge von 0,1 bis 10 mm enthält.

Die Verwendung von kurzen Fasern für die Mischungen oder Beschichtungen von Antriebsriemen, wie Zahnriemen, Keilriemen oder Keilrippenriemen, ist z. B. aus der DE 100 16 351 A1, der EP 0 176 686 B1, der DE 43 18 454 Cl, der EP 0 662 571 A1 oder der EP 0 599 145 B1 bekannt. In Antriebsriemen sind Fasern in einem Gummi oder gummiähnlichen Kunststoff und/oder in einer Oberflächenbeschichtung enthalten, der bzw. die beim Betrieb mit Lauf- oder Bordscheiben oder Rollen in Kontakt kommt bzw. kommen, um die dynamische Belastbarkeit, die Lebensdauer, das Abriebverhalten und das Geräuschverhalten zu verbessern, ohne dass Einbußen in der Kraftübertragung hingenommen werden müssen. Bei Zahnriemen sind Reibgeräusche zwischen den Riemenflanken und den Zahnscheiben oder Bordscheiben störend, während bei Keilriemen und Keilrippenriemen, die mittels Reibschluss für die Kraftübertragung sorgen, Geräusche auftreten, die durch unterschiedliche Reibverhältnisse zwischen Riemenoberfläche und Antriebsscheibe hervorgerufen werden.
Bei Zahnriemen dient die Einbringung von Fasern zusätzlich der Stabilisierung der Zähne.

Bei Gummizahnriemen werden als Fasern Baumwoll-, Polyester-, Polyamid- oder Aramidfasern eingesetzt. Für flankenoffene Keilriemen sind Gemische von Baumwoll-, Polyester- und Polyamidfasern im Einsatz, oftmals auch Rayonfasern. Für höchste Ansprüche im Hinblick auf die vorgenannten Eigenschaften werden auch Aramidfasern, entweder als Pulpe oder als Kurzschnitte, verwendet. Schnittfasern können zusätzlich mit Haftschichten versehen sein. Die Fasern werden in die Mischung des Riemenkörpers oder - wenn der Riemen eine zusätzliche Beschichtung aufweist - in die Zusammensetzung für die Beschichtung eingemischt, wobei im Falle des Einsatzes von Aramidfasern deren gleichmäßige Verteilung in einer Mischung oftmals nur sehr schwer zu bewerkstelligen ist. Es ist auch möglich, dass die Fasern durch einen Beflockungsprozess in die Mischung oder Beschichtung eingebracht werden.

Fasern werden auch bei Keilrippenriemen zur Eigenschaftsverbesserung eingesetzt. Bei Keilrippenriemen sind zwei verschiedene Herstellverfahren, das Schleifverfahren und das Formverfahren gebräuchlich, die auch bei Keilrippenriemen einen unterschiedlichen Einsatz der Fasern ermöglichen.

Das Schleifverfahren für Riemen mit faserhaltigen Mischungen ist z. B. aus der EP 642 886 A1 bekannt. Beim Schleifverfahren werden zuerst Riemenrohlinge hergestellt und vulkanisiert, die eine glatte äußere Oberfläche haben. Anschließend werden die Rippen in die vulkanisierte Riemenoberfläche eingeschliffen. Durch die Kalanderprozesse während der Herstellung der Mischungsplatten für die Riemen sind die der Mischung zugesetzten Fasern bevorzugt quer zur Riemenumlaufrichtung ausgerichtet. Im Schleifprozess werden dann die Rippen so herausgeschliffen, dass Faserspitzen aus der Mischungsoberfläche herausragen. Für das Einmischen in Kautschukmischung können als Fasermaterialien beispielsweise Baumwolle, Polyester, Polyamide, wie z. B. Nylon, oder für höhere Ansprüche Aramide verwendet werden.

Die Alternative zum Schleifverfahren ist das Formverfahren zur Herstellung von Keilrippenriemen. Hierbei werden beim Vulkanisationsvorgang die Rippen in eine im Wesentlichen glatte Platte des unvulkanisierten Riemenrohlings eingeprägt. Auch beim Formverfahren können Fasern mit in die Kautschukmischung, die die Rippen bildet, eingemischt und in dieser mit einvulkanisiert werden, wie es beispielsweise in der US 5,904,630 offenbart ist. Die Fasern folgen dabei im Inneren der Rippen der Rippenkontur. Es ist aber auch möglich gemäß der DE 100 16 351 A1 die Fasern auf die Oberflächen des Riemens, die mit Scheiben ode Rollen in Kontakt stehen, in Form einer Beflockung aufzubringen. Bei kostengünstigen Riemen verwendet man als Beflockungsmateriel z. B. Baumwolle. Sollen die Riemen besonders hohen Anforderungen genügen, verwendet man Aramidflock.

Der vorliegenden Erfindung liegt die Aufgabe zu Grunde, Antriebsriemen bereitzustellen, die in Riementrieben ein verbessertes Abrieb- und Geräuschverhalten zeigen. Die Geräuschentwicklung soll verhindert oder vermindert werden.

Gelöst wird diese Aufgabe erfindungsgemäß dadurch, dass die im Gummi oder gummiähnlichen Kunststoff oder der Oberflächenbeschichtung enthaltenen Fasern Polyimidfasern sind.

Überraschenderweise kann durch die Verwendung dieser speziellen Fasern in der Kontaktfläche zwischen Riemen und Rollen oder Scheiben, z. b. Metall- oder Kunststoffscheiben, eine entscheidende Geräuschverminderung und ein verbesserter Abrieb beim Betrieb erzielt werden. Der Fachmann hat nicht erwartet mit der speziellen Verwendung von Polyimidfasern, einer Synthesefaserart, bei Riemen eine weitere Verbesserung von Geräusch und Abrieb zu erzielen.

Wenn die Polyimidfasern in Kautschukmischungen eingebracht werden, bieten diese im Vergleich zu beispielsweise Aramidfasern den zusäztlich den Vorteil, dass sie sich deutlich besser verarbeiten und und einfacher und gleichmäßiger in die Mischung einarbeiten lassen.

Es ist möglich, dass die gesamte Oberfläche des Riemens Fasern enthält. Zur Lösung der Aufgabe ist es aber ausreichend, wenn zumindest die Teile des Riemens Polyimidfasern aufweisen, die mit Scheiben oder Rollen in Kontakt kommen.

Polyimide sind Polymere, deren Wiederholungseinheiten durch Imid-Gruppen (-CO-NH-CO-) zusammengehalten werden. Die Imid-Gruppen können als lineare oder cyclische Einheiten vorliegen. Zu den Polyimiden gehören auch Polymere, die neben Imid- auch Amid- (Polyamidimide), Ester- (Polyesterimide) und Ether-Gruppen (Polyetherimide) als Bestandteile der Hauptkette enthalten. Polyimidfasern können z. B. unter dem Handelsnamen P84™ von der Firma Inspec Fibres, USA bezogen werden.

Die verwendeten Polyimidfasern weisen eine Länge von 0,1 bis 6 mm auf, wobei gemahlene, geschnittene oder gehackte Fasern verwendet werden können. Auch der Einsatz von Pulpe oder Fasergranulat ist möglich. Sind die Fasern länger als 6 mm, ergeben sich Verarbeitungsprobleme und Ausformungsprobleme.

Der Gummi oder gummiähnliche Kunststoff und/oder die Oberflächenbeschichtung können auf für Antriebsriemen üblichen Zusammensetzungen mit üblichen Kautschuken, wie Chloroprenkautschuk (CR), Ethylen-Propylen-Dienkautschuk (EPDM), hydriertem Nitrilkautschuk (HNBR) oder Gemischen daraus, Füll- und Zuschlagstoffe basieren.

Der Gummi oder gummiähnliche Kunststoff und/oder die Oberflächenbeschichtung, der bzw. die beim Betrieb mit Scheiben oder Rollen in Kontakt kommt bzw. kommen, können die Polyimidfasern eingemischt enthalten. Typische Werte für den Faseranteil in einer Riemenmischung für den Riemenkörper liegen bei 2 bis 30 Gewichtsteilen Fasern pro 100 Gewichtsteile Gesamtelastomer. Als Oberflächenbeschichtung können verschiedene Zusammensetzungen, z. B. Kautschuklösungen, Urethansysteme oder Systeme auf Basis von Cyanacrylat, denen Polyimidfasern zugegeben sind, eingesetzt werden. Es können aber auch zu dünnen Bahnen kalandrierte Kautschukmischungen verwendet werden, deren Fasergehalt bis zu 100 Gewichtsteile pro 100 Gewichtsteile Gesamtelastomer betragen kann. Die Riemenkörpermischungen und die Oberflächenbeschichtungszusammensetzungen können für die Herstellung von Zahn-, Keil- oder Keilrippenriemen verwendet werden. Eine Beschichtung, die Polyimidfasern enthält, bietet gegen über einem Riemen, dessen Körper aus einer faserenthaltenden Mischung besteht, den Vorteil, dass die oftmals teuren Fasern nur an der Oberfläche, wo sie für die Geräuschverminderung benötigt werden, vorhanden sind. Außerdem kann die Dichte der Fasern im Riemenkörper bedingt durch die gewünschten Eigenschaften einer Riemenkörpermischung, wie Flexibilität oder Verarbeitbarkeit, nicht beliebig erhöht werden.

Gemäß einer weiteren Ausgestaltung der Erfindung können der Gummi oder gummiähnliche Kunststoff und/oder die Oberflächenbeschichtung, der bzw. die beim Betrieb mit Scheiben oder Rollen in Kontakt kommt bzw. kommen, mit Polyimidfasern beflockt sein. Auch so erhält man Riemen, bei denen die Polyimidfasern nur dort konzentriert plaziert sind, wo sie auch benötigt werden, nämlich an den Oberflächen. Die unvulkanisierte Riemenoberfläche kann durch Anquellen mit einem organischen Lösungsmittel oder durch die Aufbringung einer Oberflächenbeschichtung, die als Haftschicht wirkt, so präpariert werden, dass die Fasern auf der Oberfläche haften. Die Polyimidfasern können dann mechanisch durch Aufstreuen, Blasen oder Rütteln oder mit Hilfe eines elektrischen Feldes oder durch Kombinationen der Methoden aufgebracht werden. Bei der Beflockung mit Hilfe eines elektrischen Feldes, auch elektrostatische Beflockung genannt, werden die Fasern durch eine Hochspannungselektrode aufgeladen, ausgerichtet und beschleunigt und fliegen entsprechend der Feldlinien zum Gegenpol, der zu beflockenden Oberfläche. Dieses Verfahren bietet den Vorteil, dass die Fasern beim Beflockungsvorgang gleichmäßig und im Wesentlichen senkrecht auf der Oberfläche zum Liegen kommen. Außerdem werden die Fasern im elektrischen Feld stark beschleunigt, dadurch dringen sie tiefer in die Oberfläche ein, was wiederum eine bessere Verankerung bewirkt. Man kann durch die im Wesentlichen senkrecht in der Oberfläche stehenden Fasern eine sehr große Beflockungsdichte erzielen. Damit eine elektrostatische Beflockung effektiv durchgeführt werden kann, sollten die Fasern eine gewisse Leitfähigkeit aufweisen, damit die Fasern schnell Ladungen aufnehmen und abgeben können. Um dies zu erreichen werden Fasern, die im unbehandelten Zustand nicht leiten, mit einer antistatischen oder elektrisch leitfähigen Beschichtung (Präparation, Ausrüstung) versehen. Polyimidfasern weisen demgegenüber eine gewisse Eigenleitfähigkeit auf, so dass auf diese zusätzliche Beschichtung verzichtet werden kann. Um die Leitfähigkeit weiter zu erhöhen, ist eine zusätzliche Aufbringung einer elektrisch leitfähigen Beschichtung auf die Polyimidfasern aber möglich.

Es ist auch möglich, dass die erfindungsgemäßen Riemen Polyimidfasern sowohl in eine Mischung oder Zusammensetzung eingemischt als auch als Beflockung aufweisen.

Es hat sich als vorteilhaft erwiesen, wenn der Gummi oder gummiähnliche Kunststoff und/oder die Oberflächenbeschichtung, der bzw. die beim Betrieb mit Scheiben oder Rollen in Kontakt kommt bzw. kommen, neben den Polyimidfasern zumindest ein Fluorpolymer, bevorzugt Polytetrafluorethylen, enthält. Bei gleichzeitiger Anwesenheit des Fluorpolymers im Kontaktbereich Riemen-Rolle kann eine weitere Verbesserung hinsichtlich Geräusch und Abrieb erzielt werden.

In dem Gummi oder gummiähnlichen Kunststoff und/oder der Oberflächenbeschichtung können neben den Polyimidfasern auch andere Fasern, wie z. B. Baumwollfasern, Rayonfasern, Fasern aus Aramiden (z. B. Para-Aramide und Meta-Aramide), Fasern aus Polyacrylnitril, Fasern aus Polyester oder Fasern auf Basis von Melaminharz, enthalten sein.

Die Geräuschverhalten lässt sich auch dadurch weiter verbessern, dass der Gummi oder gummiähnliche Kunststoff und/oder die Oberflächenbeschichtung, der bzw. die beim Betrieb mit Scheiben oder Rollen in Kontakt kommt bzw. kommen, neben den Polyimidfasern gleichzeitig ein Pulver aus einem Nichteisenmetall enthält. Nichteisenmetall ist die Sammelbezeichnung für unlegierte Metalle mit Ausnahme des Eisens und für Legierungen, in denen ein Metall außer Eisen den größten Massenanteil aufweist. Pulver aus diesen Nichteisenmetallen können verwendet werden. Bevorzugt wird Kupferpulver eingesetzt. Es hat sich gezeigt, dass mit Kupferpulver ein besonders gutes Geräuschverhalten erzielt werden kann.

Die erfindungsgemäßen Antriebsriemen können Gummizahnriemen sein, deren Zähne z. B. aus einer Gummimischung, die Polyimidfasern enthält, bestehen. Beim Laufen über Zahnscheiben weisen die Riemen im Vergleich zu Zahnriemen, deren Zähne andere Fasern enthalten, ein verbessertes Geräuschverhalten auf.

Bei den erfindungsgemäßen Antriebsriemen kann es sich auch um Keilrippenriemen handeln, deren Rippen z. B. einen äußere Beschichtung mit Polyimidfasern aufweisen.

Die erfindungsgemäßen Antriebsriemen können nach dem Fachmann bekannten Verfahren hergestellt werden.

Im Folgenden wird die Erfindung anhand von Ausführungsbeipielen und der nachstehenden Figur näher erläutert, ohne jedoch auf diese Beispiele beschränkt zu sein.

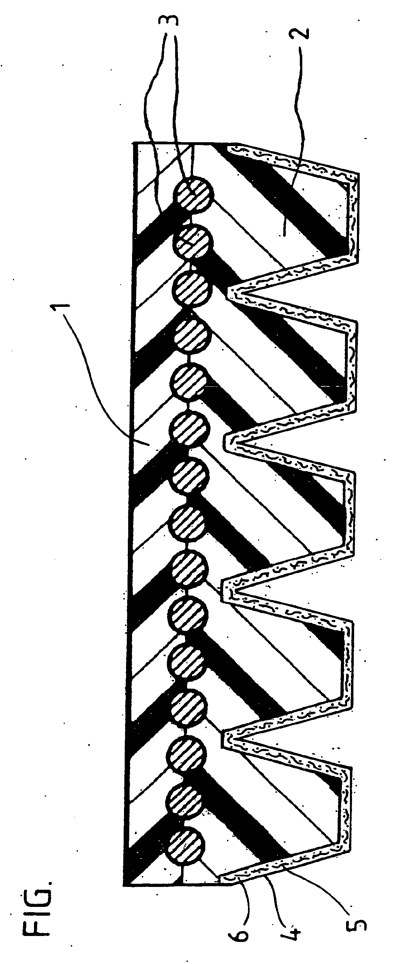

Die einzige Figur zeigt schematisch den Querschnitt eines erfindungsgemäßen Antriebsriemens.

In der Figur ist ein erfindungsgemäßer Antriebsriemen in Form eines Keilrippenriemens dargestellt, der eine elastomere Decklage 1, einen elastomeren Grundkörper 2 und dazwischen eine Zugträgerlage 3 aufweist. Auf den Rippen des Keilrippenriemens befindet sich eine Oberflächenbeschichtung 4, die Polyimidfasern 5 in Kombination mit Fluorpolymerpulver 6 enthält.

Für die äußere Beschichtung kann z. B. eine Elastomerschicht aus folgender Mischung verwendet werden:

| | |
|---|---|
| 100 Gew.-teile | EPDM |
| 90 Gew.-teile | Polyimidfasern |
| 50 Gew.-teile | PTFE-Pulver |
| 10 Gew.-teile | Aktivatoren |
| 15 Gew.-teile | Füllstoffe |
| 7 Gew.-teile | Vernetzer |
| 10 Gew.-teile | Acrylat |
| 10 Gew.-teile | Haftvermittler |
| 1 Gew.-teil | Weichmacher |
| 5 Gew.-teile | Stearinsäure |
| 10 Gew.-teile | Verarbeitungshilfsmittel |

Die Mischung wird in herkömmlichen Mischapparaturen gemischt und im Anschluss daran zu einer Bahn kalandriert und dann auf den Riemenwickelrohling aufgebracht. Die Polyimidfasern lassen sich beim Mischvorgang gut in der Mischung verteilen und Verarbeitungsprobleme, wie z. B. Nesterbildung, treten nicht auf. Anschließend wird vulkanisiert und der Wickel in Keilrippenriemen der gewünschten Breite geschnitten.

In der Tabelle 1 sind die Ergebnisse von Geräusch- und Abriebversuchen in Prüfvorrichtungen mit Keilrippenriemen dargestellt. Die Riemen unterscheiden sich nur in den Zuschlagstoffen für die Zusammensetzung der Elastomerschicht, die die äußere Beschichtung auf den Riemenrippen bildet.
Bewertung: befriedigend o, gut +, sehr gut ++

**Tabelle 1**

| **Zuschlagstoffe** | **Geräusch** | **Abrieb** |
|---|---|---|
| Aramidfasern | + | o |
| Polyimidfasern | + | + |
| Aramidfasern und PTFE-Pulver | + | ++ |
| Polyimidfasern und PTFE-Pulver | ++ | ++ |
| Polyimidfasern und Kupferpulver | ++ | + |
| Polyimidfasern und PTFE-Pulver und Kupferpulver | ++ | ++ |

Aus der Tabelle 1 wird ersichtlich, dass durch die Anwesenheit von Polyimidfasern Riemen erhalten werden, die gegenüber Riemen mit Aramidfasern einen verbesserten Abrieb aufweisen. Kombiniert man Polyimidfasern mit Polytetrafluorethylen(PTFE)-Pulver und/oder mit Kupferpulver in der äußeren Beschichtung kann das Geräuschverhalten der Riemen im Vergleich zu Riemen mit Aramidfasern und PTFE-Pulver weiter verbessert werden.

Als Vergleich wurden ferner auch Keilrippenriemen untersucht, deren Rippenoberfläche mit Baumwoll-, Polyamid-, Viskose- und Polyesterfasern beflockt wurde. Keiner dieser Riemen zeigte hinsichtlich des Geräusch- und Abriebverhaltens so gute Werte, wie ein Keilrippenriemen mit Polyimidfasern in der äußeren Beschichtung.

## Patentansprüche

1. Antriebsriemen aus Gummi oder gummiähnlichem Kunststoff (1, 2) mit einer in den Gummi oder den gummiähnlichen Kunststoff (1, 2) eingebetteten Zugträgerlage (3) und gegebenenfalls Oberflächenarmierungen und/oder -beschichtungen (4), wobei zumindest der Gummi oder gummiähnliche Kunststoff (1, 2) und/oder die Oberflächenbeschichtung (4), der bzw. die beim Betrieb mit Scheiben oder Rollen in Kontakt kommt bzw. kommen, Fasern (5) mit einer Länge von 0,1 bis 10 mm enthält,
**dadurch gekennzeichnet, dass**
die Fasern (5) Polyimidfasern sind.

2. Antriebsriemen nach Anspruch 1, **dadurch gekennzeichnet, dass** der Gummi oder gummiähnliche Kunststoff (1, 2) und/oder die Oberflächenbeschichtung (4), der bzw. die beim Betrieb mit Scheiben oder Rollen in Kontakt kommt bzw. kommen, Polyimidfasern (5) eingemischt enthält.

3. Antriebsriemen nach Anspruch 1, **dadurch gekennzeichnet, dass** der Gummi oder gummiähnliche Kunststoff (1, 2) und/oder die Oberflächenbeschichtung (4), der bzw. die beim Betrieb mit Scheiben oder Rollen in Kontakt kommt bzw. kommen, mit Polyimidfasern beflockt ist.

4. Antriebsriemen nach zumindest einem der Ansprüche 1 bis 3, **dadurch gekennzeichnet, dass** der Gummi oder gummiähnliche Kunststoff (1, 2) und/oder die Oberflächenbeschichtung (4), der bzw. die beim Betrieb mit Scheiben oder Rollen in Kontakt kommt bzw. kommen, zumindest ein Fluorpolymer (6) enthält.

5. Antriebsriemen nach Anspruch 4, **dadurch gekennzeichnet, dass** das Fluorpolymer (6) Polytetrafluorethylen ist.

6. Antriebsriemen nach zumindest einem der Ansprüche 1 bis 5, **dadurch gekennzeichnet, dass** der Gummi oder gummiähnliche Kunststoff (1, 2) und/oder die Oberflächenbeschichtung (4), der bzw. die beim Betrieb mit Scheiben oder Rollen in Kontakt kommt bzw. kommen, Pulver aus einem Nichteisenmetall enthält.

7. Antriebsriemen nach zumindest einem der Ansprüche 1 bis 6, **dadurch gekennzeichnet, dass** der Riemen ein Gummizahnriemen ist.

8. Antriebsriemen nach zumindest einem der Ansprüche 1 bis 6, **dadurch gekennzeichnet, dass** der Riemen ein Keilrippenriemen ist.

## Claims

1. Driving belt made of rubber or rubber-like plastic (1, 2), with a tensionable layer (3) embedded in the rubber or the rubber-like plastic (1, 2), and if appropriate surface reinforcements and/or coatings (4), at least the rubber or rubber-like plastic (1, 2) and/or the surface coating (4) which comes or come into contact with pulleys or rollers during operation containing fibres (5) with a length of from 0.1 to 10 mm, **characterized in that** the fibres (5) are polyimide fibres.

2. Driving belt according to Claim 1, **characterized in that** the rubber or rubber-like plastic (1, 2) and/or the surface coating (4) which comes or come into contact with pulleys or rollers during operation contain(s) polyimide fibres (5) mixed in.

3. Driving belt according to Claim 1, **characterized in that** the rubber or rubber-like plastic (1, 2) and/or the surface coating (4) which comes or come into contact with pulleys or rollers during operation is/are flocked with polyimide fibres.

4. Driving belt according to at least one of Claims 1 to 3, **characterized in that** the rubber or rubber-like plastic (1, 2) and/or the surface coating (4) which comes or come into contact with pulleys or rollers during operation contain(s) at least one fluoropolymer (6).

5. Driving belt according to Claim 4, **characterized in that** the fluoropolymer (6) is polytetrafluoroethylene.

6. Driving belt according to at least one of Claims 1 to 5, **characterized in that** the rubber or rubber-like plastic (1, 2) and/or the surface coating (4) which comes or come into contact with pulleys or rollers during operation contain(s) powder of a nonferrous metal.

7. Driving belt according to at least one of Claims 1 to 6, **characterized in that** the belt is a rubber toothed belt.

8. Driving belt according to at least one of Claims 1 to 6, **characterized in that** the belt is a V-ribbed belt.

## Revendications

1. Courroie d'entraînement en caoutchouc ou en matière plastique de type caoutchouc (1, 2), avec une couche de tirants (3) noyée dans le caoutchouc ou la matière plastique de type caoutchouc (1, 2) et éventuellement des armatures et/ou des revêtements de surface (4), dans laquelle au moins le caoutchouc ou la matière plastique de type caoutchouc (1, 2) et/ou le revêtement de surface (4), qui vient/viennent en contact en service avec des poulies ou des rouleaux, contient des fibres (5) d'une longueur de 0,1 à 10 mm, **caractérisée en ce que** les fibres (5) sont des fibres de polyimide.

2. Courroie d'entraînement selon la revendication 1, **caractérisée en ce que** le caoutchouc ou la matière plastique de type caoutchouc (1, 2) et/ou le revêtement de surface (4), qui vient/viennent en contact en service avec des poulies ou des rouleaux, contient des fibres de polyimide (5) en mélange.

3. Courroie d'entraînement selon la revendication 1, **caractérisée en ce que** le caoutchouc ou la matière plastique de type caoutchouc (1, 2) et/ou le revêtement de surface (4), qui vient/viennent en contact en service avec des poulies ou des rouleaux, est floqué avec des fibres de polyimide.

4. Courroie d'entraînement selon au moins une des revendications 1 à 3, **caractérisée en ce que** le caoutchouc ou la matière plastique de type caoutchouc (1, 2) et/ou le revêtement de surface (4), qui vient/viennent en contact en service avec des poulies ou des rouleaux, contient au moins un polymère fluoré (6).

5. Courroie d'entraînement selon la revendication 4, **caractérisée en ce que** le polymère fluoré (6) est le polytétrafluoroéthylène.

6. Courroie d'entraînement selon au moins une des revendications 1 à 5, **caractérisée en ce que** le caoutchouc ou la matière plastique de type caoutchouc (1, 2) et/ou le revêtement de surface (4), qui vient/viennent en contact en service avec des poulies ou des rouleaux, contient une poudre d'un métal non ferreux.

7. Courroie d'entraînement selon au moins une des revendications 1 à 6, **caractérisée en ce que** la courroie est une courroie dentée en caoutchouc.

8. Courroie d'entraînement selon au moins une des revendications 1 à 6, **caractérisée en ce que** la courroie est une courroie à nervures trapézoïdales.
